# EUROPEAN PATENT APPLICATION

(11) **EP 2 711 346 A1**
(43) Date of publication of application: **26.03.2014**
(21) Application number: 12185943.3
(22) Date of filing: 25.09.2012
(51) Int. Cl.: C03C 27/10, B41M 5/00, B32B 17/10

(54) **Multi-layered panel and method for manufacturing a multi-layered panel**

(71) Applicant: Falco Technologies BVBA, 3390 Tielt-Winge (BE)
(72) Inventor: van Duffel, Bart, 3390 Tielt-Winge (BE); van Duffel, Antonius Wilhelmus, 3210 Lubbeek (BE)
(74) Representative: IP Hills NV

(57) **Abstract**

The invention relates to a multi-layered panel (1) comprising at least one glass plate (3), said multi-layered panel (1) at least further comprising a digitally printed substrate (10) and an adhesive layer (7) gluing said digitally printed substrate (10) and said glass plate (6) together, wherein said digital print (5) faces said adhesive layer (7). The invention also relates to a method for manufacturing such a multi-layered panel (1), said method at least comprising the steps of providing a digitally printed substrate (10) and a glass plate (6), and applying an adhesive layer (7) between said digitally printed substrate (10) and said glass plate (6), wherein said digital print (5) faces said adhesive layer (7).

## Description

### Field of the Invention

The present invention relates to a multi-layered panel comprising at least one glass plate. The present invention also relates to a method for manufacturing such a multi-layered panel.

### Background of the Invention

As living standards improve, people pay more and more attention to interior as well as exterior decoration of windows, doors and outer walls of amongst others buildings and vehicles. Single as well as multi-layered glass can be decorated. Multi-layering of glass sheets therewith provides an enhanced mechanical stability of the glass. Multi-layered glass sheets also allow to include decorative features between the different glass layers.

There is significant commercial interest in the fabrication of customized multi-layered glass panels with encapsulated coloured decoration for use in architectural and automotive applications.

Because of its ceramic nature, glass however is a very challenging substrate for decorating, coating and printing.

In the patent literature, already several methods and approaches for manufacturing decorated multi-layered panels have been described, circumventing or trying to solve the difficulty to decorate glass.

For instance multi-layered glass panels are manufactured using decorated foils between different glass plates or other types of substrates.

In EP 2 030 778, a decorative laminated glass is described comprising two transparent substrates and an intermediate film including two adhesive resin films and a base film having an ink layer printed in a predetermining pattern therebetween. The intermediate film is arranged between the transparent substrates to be combined with each other.

In US 2004/234735, a method and apparatus is described for producing an image carrying laminated material. An image is printed on a polyvinylbutyral interlayer using a solvent based ink, paint or dye system. The interlayer is used to join two sheets of material to form the laminate.

In DE 3232238, a pane of laminated glass is made of two individual panes of glass and a thermoplastic intermediate layer, the latter joined to one another A particularly decorative effect is given due to the fact that one individual pane of glass is printed with narrow stripes, arranged parallel to one another, of a printable ink on the surface joined to the thermoplastic intermediate layer.

Other patent documents describe decorative laminated safety glass using a decorated foil.

In US 2008/105371 for instance, a process is described for preparing a decorative glass laminate comprising a rigid thermoplastic interlayer, wherein the process comprises printing an image onto at least one of the interlayer surfaces.

In WO 2005/085371 and WO 2006/050536, the decorative laminated article comprises an image bearing thermoplastic interlayer, wherein the image has been printed on the interlayer using an inkjet printing process. The image therewith comprises a white pigment on the surface of the thermoplastic interlayer.

In EP 1 651 434, a decorative glass laminate is disclosed comprising a rigid interlayer bearing a printed image that has been printed onto at least one of the interlayer surfaces. Also a process for preparing the same is disclosed.

An alternative for using a decorated foil is disclosed in EP 1 462 423, describing ornamental multi-layered glass, wherein a texture is shown similar to the surface of a material different to the glass such as may be wood or stone without having to incorporate such materials. In this invention, use is made of a double glass layer between the layers of which a paper is arranged, being printed on one or both of its faces, the assembly being joined by a transparent adhesive. As a consequence, the printed motif, through the glass, has the same appearance as the material represented.

Another alternative for a single foil or a thermoplastic intermediate layer is to combine multiple foils into a composite polymer film which is then laminated between two glass sheets.

US 2006/078716 describes a plastic composite comprising colour images printed onto a polymeric support film using UV-ink. This polymeric support film layer may be bonded to a polymeric film selected from the group consisting of aliphatic polyurethane (aliphatic PU) and ethyl vinyl acetate (EVA). The combined laminate can then optionally be disposed between two layers of plasticized polyvinyl butyral (PVB) forming the plastic composite. This plastic composite can then be placed between two sheets of glass forming the final laminated glass product.

JP 8157239 describes a sandwich glass comprising a plastic film of a polycarbonate system which is printed with ink, for instance a chlorinated vinyl acetate based ink, by means of offset printing, through which a patterned film having the pattern layer is formed. On both sides of the patterned film, a synthetic resin adhesive is formed. On both sides of the synthetic resin adhesives, glass plates are laminated and bonded by which a sandwich glass is produced.

Foils mostly are sheets of thermoplastic polymers or plastic sheets coated with a thermoplastic or pressure sensitive adhesive. To achieve sufficient bonding between the foil(s) and glass, the contact needs to be enhanced under pressure and heating, requiring energy. Foils which are applied as decoration on the outside of glass are exposed to weathering and abrasion, seriously limiting the life time thereof.

Another approach to decorate glass is to apply a glass frit onto a glass substrate and firing it. Glass frit is a glass powder and has the same chemical nature as glass. A number of patent documents describe to apply glass frits or ceramic inks based on glass frits by printing methods like screen or inkjet printing to the glass surface, whereafter these printed surfaces are fired through which the glass frits are molten onto the glass surface.

In WO 2009/147676 for instance, a process is disclosed for producing glass which is printed between two glass layers of a two-layered glass panel. This process comprises the steps of printing a pattern on a first glass sheet using an ink composition comprising particles of glass frit, inorganic pigment particles and organic polymeric binding, pre-firing the pattern at a temperature of 350 - 450 degrees centigrade and then laying a second glass sheet on top of the pre-fired pattern on the first glass sheet to produce a stack. The stack is then fired at a temperature of at least 575 degrees centigrade. Finally, a plastic spacer is applied between the first and second sheet to produce a glass laminate.

The disadvantage of this approach however is that firing of glass requires energy and safety measures and requires investments. Furthermore, heating and cooling of the glass seriously increases the length of the production cycle of the glass panel.

Still another approach is disclosed in US 5,891,520. Therein, a method for decorating and/or labelling glass articles and like ceramic ware by screen printing is described. This method comprises the steps of
- treating a glass article or the like with a silane adhesion promoter; and
- applying a non-ceramic screen ink directly onto the silane-treated glass article by screen printing.

Since screen printing needs a great preparation and setup and needs a large amount of material, a large printing number is necessary to make decorating of glass using the abovementioned method economically feasible. This method is not suitable for manufacturing a single piece of a multi-layered panel.

There is consequently a desire to obtain an improved multi-layered panel with at least one glass panel. Preferably, this improved multi-layered panel has the aesthetics of glass and has a high quality decoration which is furthermore protected against abrasion, scratch, chemicals or pollution and is impact proof. Furthermore, it is desired that the multi-layered panel is easy to clean, is strong but at the same time light and can be manufactured easily, at low-cost and in an energy-efficient manner. It is finally desired that the improved multi-layered panel is lightfast and acoustic insulating.

### Summary of the Invention

According to a first aspect of the invention, a multi-layered panel is provided comprising at least one glass plate, said multi-layered panel at least further comprising
- a digitally printed substrate comprising a digital print; and
- an adhesive layer gluing said digitally printed substrate and said glass plate together, wherein said digital print faces said adhesive layer.

A major advantage of using digital printing to decorate the substrate is that it is a very flexible and a quick means for preparing finished printed images since the required setup times is minimal to produce an image, reducing the cost and the turnaround time of a short run as compared to traditional screen printing operations. Furthermore, in contrary to more traditional printing techniques like screen printing, with digital printing no intermediate steps between the image file and the print are present. The advantage thereof is that single print jobs are economically meaningful.

Furthermore, by arranging the digital print between two layers, this digital print is protected from abrasion, scratch, chemicals and pollution.

Also, a low cost, impact proof, easy-to-clean, strong and light multi-layered panel is obtained in this way.

In a first possible embodiment of a multi-layered panel according to the invention, said digitally printed substrate comprises a directly digitally printed metal, polyvinylchloride, polycarbonate, polypropylene, polyethylene, polyurethane or acrylic substrate. Examples of metal substrates are aluminium, steel and stainless steel. With 'directly printed' is meant that no extra coating layer has to be applied in order to print the substrate. Low energy plastics such as polyethylene and polypropylene however need a standard pre-treatment, typically a corona-treatment, in order to raise the surface energy of the substrate. Because the adhesion of inks onto these substrates is generally better in comparison to glass, less or no adsorption competition occurs with the adhesive causing no distortion of the digital print during the bonding step when an adhesive layer is applied on this digital print.

A problem that occurs with directly digitally printed glass is that, when applying a liquid glass adhesive on this digital print - which is a very attractive approach to obtain a multi-layered panel since a very strong multi-layered panel is obtained and the use of low energy curing methods is possible - the molecular constituents of the adhesive layer will compete with the ink polymer for adsorption on the glass surface and they will also wet the cured ink droplets. In other words this digitally printed layer is not compatible with these liquid glass adhesives. As a result, the ink droplets of the printed layer will debond from the glass surface before and during the curing process thereof. At that moment, the adhesive layer undesirably acts as a cleaning solvent. This process is called chemical debonding, resulting in a distortion of the digital print.

This problem for instance can occur with the system for manufacturing laminated artistic stained glass as disclosed in ES 2050610. Therein, a system based on glass panes which have, on one of their surfaces, drawings printed by any process. On the drawing-bearing surface side of the glass pane is placed a second pane of glass, which is transparent, of the same size, and which bears no drawing. The two panes are placed in a mutually close and parallel position, with the perimeters coinciding. The space limited between the two panes is sealed peripherally to form a sealed chamber which is filled with a solidifiable liquid adhesive of a transparent type. The stained glass obtained is composed of a stratified structure formed by two outer panes of glass and an intermediate layer of a solidified, transparent adherent substance.

This problem is solved by providing a second embodiment of a multi-layered panel according to the invention, said digitally printed substrate comprising
- a glass substrate,
- said digital print facing said adhesive layer; and
- a glass adhesion promoting layer applied between said glass substrate and said digital print, said glass adhesion promoting layer being adapted to prevent chemical debonding of said digital print from said glass substrate when said adhesive layer is applied on said digital print.

The glass adhesion promoting layer is therewith specifically selected as to bond to the glass by means of both polar physical and chemical bonds and also to the ink of the digital print.

In this way, a fast and easy solution is obtained to digitally print on glass using standard digital printing equipment, without the problem of chemical debonding of the digital print when the liquid adhesive layer is applied thereon.

In a preferred embodiment of a multi-layered panel according to the invention, said glass adhesion promoting layer comprises a molecular adhesion promoter, a hybrid organic-inorganic coating and/or a self-assembled monolayer.

More preferably, said glass adhesion promoting layer comprises one or more silane compounds.

In a favourable embodiment of a multi-layered panel according to the invention, said digital print is printed using an UV-curable or a thermocurable ink or an ink that can be sintered by means of Xenon-flash or laser.

UV-curable ink has the advantage that it essentially does not contain any solvent that otherwise must evaporate during the curing phase thereof.

In an advantageous embodiment of a multi-layered panel according to the invention, said digital print is printed using functional inks comprising an electrical conductive ink, an isolating ink and / or a luminous ink. It is possible to print digitally with these functional inks. These functional inks possibly are UV- curable, but are not limited thereto.

In a preferred embodiment of a multi-layered panel according to the invention, said adhesive layer comprises an adhesive chosen from an acrylic-type, an epoxy-type, a polyurethane type, a silicone type or a polyester-type adhesive.

In a possible embodiment of a multi-layered panel according to the invention, said multi-layered panel comprises one or more further glass plates and/or one or more digitally printed substrates being glued to said digitally printed substrate(s) and / or said further glass plate(s) by means of an adhesive layer.

In an advantageous embodiment of a multi-layered panel according to the invention, said adhesive layer comprises an UV- or thermo curable adhesive, or a two-component adhesive.

According to a second aspect of the invention, a method for manufacturing a multi-layered panel according to the invention as disclosed above is described, wherein said method at least comprises the steps of
- providing a digitally printed substrate comprising a digital print and a glass plate; and
- applying an adhesive layer between said digitally printed substrate and said glass plate,
wherein said digital print faces said adhesive layer.

Preferably, applying said adhesive layer between said digitally printed substrate and said glass plate comprises the steps of:
- adhering to the outside of said digitally printed substrate and said glass plate a self-adhesive foil, the size of said self-adhesive foil exceeding the size of said digitally printed substrate and said glass plate through which a part of each of said self-adhesive foils do not cover said digitally printed substrate, respectively said glass plate;
- applying a liquid adhesive between said digitally printed substrate and said glass plate;
- bringing said digitally printed substrate and said glass plate together, therewith entrapping said liquid adhesive between said digitally printed substrate and said glass plate and at the same time sticking together said parts of both foils not covering said digitally printed substrate, respectively said glass plate; and
- removing said foil from the formed multi-layered panel.

When the multi-layered panel according to the invention is a multi-stack panel comprising more than two substrates to be glued to each other, first, two layers are glued together by means of the method as described above, whereafter a next substrate is glued to the substrates already glued together also using this method. If different substrates of such a multi-stack panel have to be provided with a digital print, then first two substrates are glued together by means of the method as described above and subsequently a digital print is applied to the appropriate side thereof, whereafter a further substrate is glued to the two substrates already glued together, this also by means of the method as described above. Further substrates are attached in the same way.

In an advantageous method according to invention, said digital print is applied on said glass adhesion promoting layer at the moment said glass adhesion promoting layer is wet or semi-dried.

In a preferred method according to the invention, said glass adhesion promoting layer and said digital print are cured in the same curing step.

Deposition of a fluid glass adhesion promoting layer can be performed using any known deposition methods for deposition of fluid coatings such as spraying, plasma deposition such as vacuum or atmospheric plasma deposition, dip coating, roll coating or curtain coating.

The formation of a digitally printed glass substrate comprising the steps of
- providing a glass substrate;
- applying on at least part of said glass substrate a glass adhesion promoting layer;
- applying on at least part of said glass adhesion promoting layer a digital print; and
- curing said glass adhesion promoting layer and said digital print, therewith preferably applying said glass adhesion promoting layer at the moment said glass adhesion promoting layer is wet or semi-dried and therewith preferably curing said glass adhesion promoting layer and said digital print in the same curing step,
   this in order to provide a fast and easy solution to digitally print on glass, can also be applied on its own without the need to manufacture a multi-layered panel comprising at least one glass plate.

Also the digitally printed glass substrate comprising
- a glass substrate,
- a digital print; and
- a glass adhesion promoting layer applied between said glass substrate and said digital print,
said glass adhesion promoting layer preferably comprising a molecular adhesion promoter, a hybrid organic-inorganic coating and/or a self-assembled monolayer, and more preferably, comprising one or more silane compounds, can be applied on its own without being in a multi-layered panel comprising the at least one glass plate.

It has surprisingly been found that when the glass adhesion promoting layer is still liquid or more or less liquid when being printed upon, a thorough contact or even a partial interpenetration is possible between the ink and the glass adhesion promoting layer. Furthermore, when the polymerization chemistry of the digital printing ink and the glass adhesion promoter layer are able to co-polymerise, the ink and the glass adhesion promoter layer join chemically during the curing or sintering step. Consequently, a stronger bond is then generated between the digital printing ink and the glass surface helping in avoiding chemical debonding of the digital print when subsequent application of a liquid adhesive onto the digital print.

### Brief Description of the Drawings

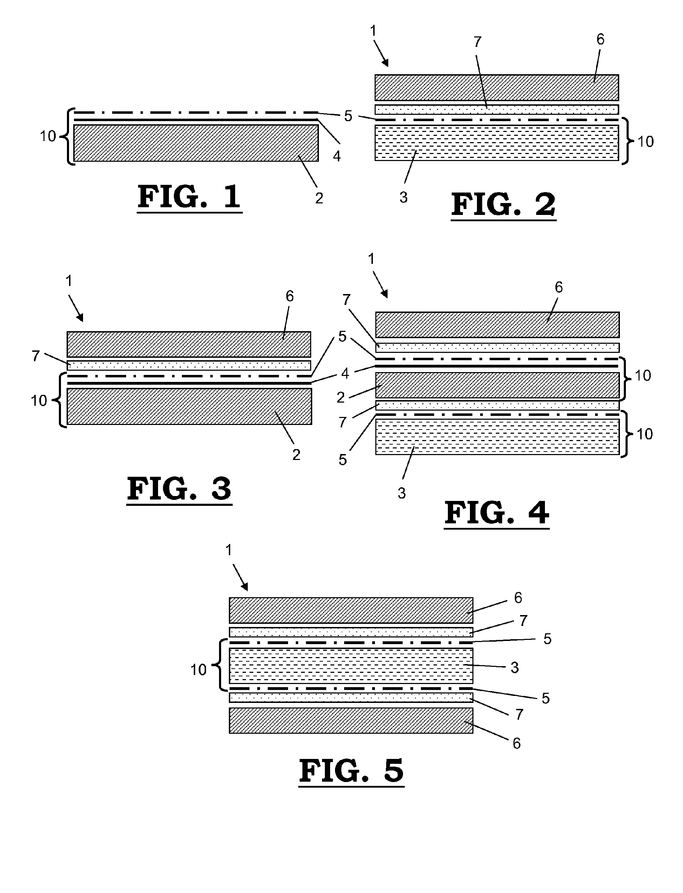

Fig. 1 illustrates a schematic exploded view of a digitally printed glass substrate which is pre-treated with a glass adhesion promoting layer before digitally printing the glass substrate;

Fig. 2 illustrates a schematic exploded view of a multi-layered panel according to the invention, consisting of a direct digitally printed substrate such as a metal, acrylic, polyvinylchloride, polycarbonate, polypropylene, polyethylene or polyurethane substrate, an upper glass plate and an adhesive layer between said digitally printed substrate and said upper glass plate;

Fig. 3 illustrates a schematic exploded view of a multi-layered panel according to the invention, consisting of a lower digitally printed glass substrate being pre-treated with a glass adhesion promoting layer before being digitally printed, an upper glass plate and an adhesive layer between the top of the digitally printed substrate and the back of the upper glass plate;

Fig. 4 illustrates a schematic exploded view of a multi-layered panel according to the invention, consisting of a lower direct digitally printed substrate, an intermediate digitally printed glass substrate being pre-treated with a glass adhesion promoting layer before being digitally printed and an upper glass plate, an adhesive layer between the top of the lower digitally printed substrate and the back of the intermediate digitally printed glass substrate and an adhesive layer between the top of this intermediate digitally printed glass substrate and the back of the upper glass plate;

Fig. 5 illustrates a schematic exploded view of a multi-layered panel according to the invention consisting of a lower glass plate, an intermediate substrate directly digitally printed at the top as well as at the back thereof, an upper glass plate, an adhesive layer between the back of the upper glass plate and the top of the direct digitally printed substrate and the back of the direct digitally printed substrate and the top of the lower glass plate; and

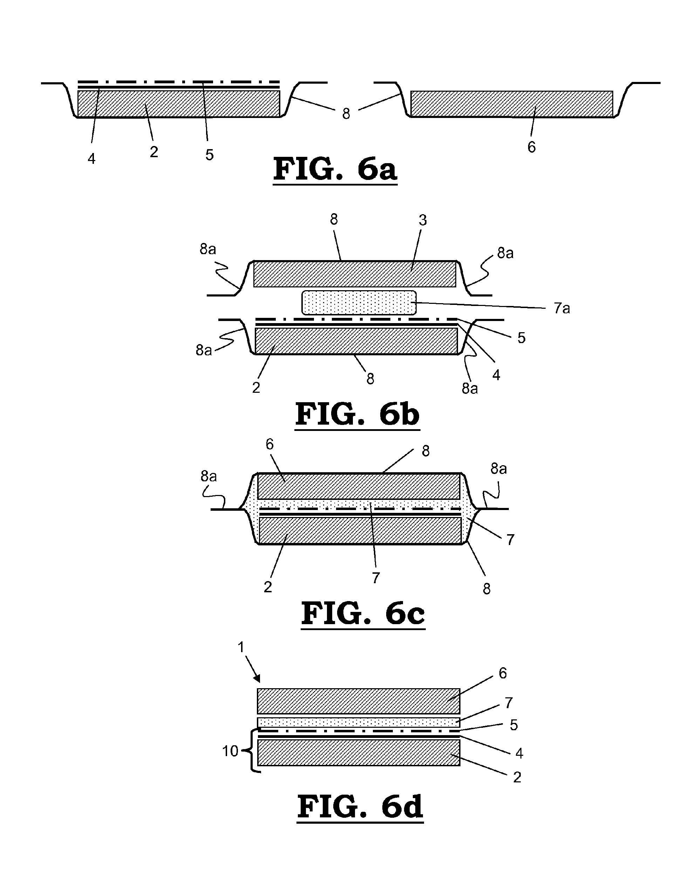

Figures 6a - 6d illustrate a schematic view of the subsequent steps of a method for gluing together a lower digitally printed glass substrate being pre-treated with a glass adhesion promoting layer before being digitally printed, with an upper glass plate by means of an adhesive layer.

### Detailed Description of Embodiment(s)

In figure 1, a digitally printed substrate (10) is shown consisting of
- a glass substrate (2),
- a digital print (5); and
- a glass adhesion promoting layer (4) applied between said glass substrate (2) and said digital print (5).
The glass adhesion promoting layer (4) is therewith adapted to prevent chemical debonding of the digital print (5) from the glass substrate (2) when an adhesive layer (7), as is shown in figure 2, is applied onto said digital print (5).

The digital print (5) preferably is printed using an UV-curable ink. However, also a thermocurable ink or an ink that can be sintered using Xenon-flash or laser can be used.

The glass adhesion promoting layer (4) preferably comprises a silane compound, other suitable glass adhesion promoting layers (4) however not being excluded.

An example of a glass adhesion promoting layer comprising one or more silane compounds is a glass adhesion promoter comprising a silane or a combination of silanes out of the following non-limitative list: methacryloxypropyl trimethoxysilane, acryloxypropyl trimethoxysilane, methacryloxypropyltris(trimethylsiloxy)silane, methacryloxypropyl triethoxysilane, acryloxypropyltriethoxysilane, methacryloxypropyltriisopropoxysilane, 2-(3,4-epoxycyclohexyl)ethyltrimethoxysilane, 5,6-epoxyhexyl trimethoxysilane,5,6-epoxytriethoxysilane, (3-Glycidoxypropyl)methyldiethoxysilane, (3-Glycidoxypropyl)methyldimethoxysilane, (3-Glycidoxypropyl)dimethylethoxysilane, (3-Glycidoxypropyl)bis(trimethylsiloxy)methylsilane, (3-Glycidoxypropyl)trimethoxysilane.

Another example of a glass adhesion promoter layer comprising one or more silane compounds is a primer coating which is composed of
- an UV-curable resin or a mixture of UV-curable resins;
- one or more radical or photo-initiators;
- a glass adhesion promoter as indicated above;
- and optionally other additives to optimize the performance of the primer coating.

Also the glass adhesion promoting layer (4) preferably is UV-curable. For instance an UV-curable sol-gel coating can be used. Other types glass adhesion promoting layers (4) however are not excluded.

The digital print (5) is preferably applied onto the glass adhesion promoting layer (4) when this last one is semi-dried or most preferably when this last one still is wet. The curing, preferably UV-curing, of this glass adhesion promoting layer (4) and the digital print (5) preferably are done in the same step, and most preferably during the digital printing step. UV-curing has the advantage that the imposed mechanical stress on the multi-layered panel (1) is very limited due to the absence of a significant heating.

In figure 2, a multi-layered panel (1) according to the invention is shown, consisting of
- a digitally printed substrate (10) consisting of
   - a lower substrate (3) such as metal, polyvinylchloride (PVC), polycarbonate, polypropylene (PP), polyethylene (PE), polyurethane (PU) or acrylic substrate;
   - a digital print (5) printed directly on said substrate (3);
- an upper glass plate (6); and
- an adhesive layer (7) between the digitally printed substrate (10) and the upper glass plate (6).

Exemplary metal substrates (3) are (anodised) aluminium, steel and stainless steel.

In figure 3, a multi-layered panel (1) according to the invention is shown, consisting of
- a lower digitally printed substrate (10) as shown in figure 1;
- an upper glass surface (6); and
- an adhesive layer (7) between the lower digitally printed substrate (10) and the upper glass plate (6).

In figure 4, an example of a three-layered multi-stack is shown consisting of
- a lower digitally printed substrate (10) consisting of
   - a lower substrate (3) such as metal, polyvinylchloride (PVC), polycarbonate, polypropylene (PP), polyethylene (PE), polyurethane (PU) or acrylic substrate;
   - a digital print (5) printed directly on said substrate (3);
- an intermediate digitally printed substrate (10) as shown in figure 1;
- an upper glass plate (6); and
- an adhesive layer (7) between
   - the lower digitally printed substrate (10) and the intermediate digitally printed substrate (10); and
   - the intermediate digitally printed substrate (10) and the upper glass plate (6).

In figure 5, another example of a three-layered multi-stack is shown consisting of
- a lower glass plate (6);
- an intermediate digitally printed substrate (10) consisting of
   - a lower substrate (3) such as metal, polyvinylchloride (PVC), polycarbonate, polypropylene (PP), polyethylene (PE), polyurethane (PU) or acrylic substrate;
   - on the back as well as the front of this substrate (3), a directly printed digital print (5);
- an upper glass plate (6); and
- an adhesive layer (7) between
   - the intermediate digitally printed substrate (10) and the lower glass plate (6); and
   - the intermediate digitally printed substrate (10) and the upper glass plate (6).

It is remarked that a multi-stack panel (1) according to the invention can comprise any number more than two layers and can consist out of any desired possible combination of one or more digitally printed substrates (10), either comprising a substrate (3) such as metal, polyvinylchloride (PVC), polycarbonate, polypropylene (PP), polyethylene (PE), polyurethane (PU) or acrylic substrate which can be directly printed upon, probably pre-treated with a necessary standard pre-treatment not being an extra coating layer, either comprising a glass substrate (2) which has to be pre-treated with an extra glass adhesion promoting layer (4) before being digitally printed, and one or more glass plates (6).

In figures 6a - 6d, the different steps of a preferred method for applying an adhesive layer (7) between a lower digitally printed substrate (10) as shown in figure 1 and an upper glass plate (6) are demonstrated, i.e.
- figure 6a: adhering to the outside of the digitally printed substrate (10) as well the glass plate (6) a self-adhesive foil (8), the size of said self-adhesive foil (8) exceeding the size of said digitally printed substrate (10) and said glass plate (6) through which a part of each of said self-adhesive foils (8) do not cover the digitally printed substrate (10) and the glass plate (6);
- figure 6b: applying a liquid adhesive (7a) between the digitally printed substrate (10) and the glass plate (6);
- figure 6c: bringing the digitally printed substrate (10) and the glass plate (6) together, therewith entrapping the liquid adhesive (7a) between the digitally printed substrate (10) and the glass plate (6) and at the same time sticking together the parts (8a) of both foils (8) not covering the digitally printed substrate (10) and the glass plate (6); and
- figure 6d: removing the foil (8) from the formed multi-layered panel (1).

The same steps are performed for applying an adhesive layer (7) between mutual digitally printed substrates (10) and mutual glass plates (6).

For each layer to be added to form a multi-stack (1) comprising more than two layers, the steps as described above are repeated until the desired multi-stack (1) is obtained.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A multi-layered panel (1) comprising at least one glass plate (3), **CHARACTERIZED IN THAT** said multi-layered panel (1) at least further comprises
- a digitally printed substrate (10) comprising a digital print (5); and
- an adhesive layer (7) gluing said digitally printed substrate (10) and said glass plate (6) together,
wherein said digital print (5) faces said adhesive layer (7).

2. A multi-layered panel (1) according to claim 1, **CHARACTERIZED IN THAT** said digitally printed substrate (10) comprises a directly digitally printed metal, polyvinylchloride, polycarbonate, polypropylene, polyethylene, polyurethane or acrylic substrate (3).

3. A multi-layered panel (1) according to claim 1 or 2, **CHARACTERIZED IN THAT** said digitally printed substrate (10) comprises
- a glass substrate (2),
- said digital print (5) facing said adhesive layer (7); and
- a glass adhesion promoting layer (4) applied between said glass substrate (2) and said digital print (5), said glass adhesion promoting layer (4) being adapted to prevent chemical debonding of said digital print (5) from said glass substrate (2) when said adhesive layer (7) is applied on said digital print (5).

4. A multi-layered panel (1) according to any one of claims 1 to 3, **CHARACTERIZED IN THAT** said glass adhesion promoting layer (4) comprises a molecular adhesion promotor, a hybrid organic-inorganic coating and/or a self-assembled monolayer.

5. A multi-layered panel (1) according to claim 4, **CHARACTERIZED IN THAT** said glass adhesion promoting layer (4) comprises one or more silane compounds.

6. A multi-layered panel (1) according to any one of claims 1 to 5, **CHARACTERIZED IN THAT** said digital print (5) is printed using an UV-curable or a thermocurable ink or an ink that can be sintered by means of Xenon-flash or laser.

7. A multi-layered panel (1) according to any one of claims 1 to 6, **CHARACTERIZED IN THAT** said digital print (5) is printed using a functional ink comprising an electrical conductive ink, an isolating ink and / or a luminous ink.

8. A multi-layered panel (1) according to any one of claims 1 to 7, **CHARACTERIZED IN THAT** said adhesive layer (7) comprises an adhesive chosen from an acrylic-type, an epoxy-type, a poly-urethane type, a silicone type or a polyester-type adhesive.

9. A multi-layered panel (1) according to any one of claims 1 to 8, **CHARACTERIZED IN THAT** said multi-layered panel (1) comprises one or more further glass plates (6) and/or one or more digitally printed substrates (10) being glued to said digitally printed substrate(s) (10) and / or said further glass plate(s) (6) by means of an adhesive layer (7).

10. A multi-layered panel (1) according to any one of claims 1 to 9, **CHARACTERIZED IN THAT** said adhesive layer (7) comprises an UV- or thermocurable adhesive, or a two-component adhesive.

11. A method for manufacturing a multi-layered panel (1) according to any one of claims 1 to 10, **CHARACTERIZED IN THAT** said method at least comprises the steps of
- providing a digitally printed substrate (10) comprising a digital print (5) and a glass plate (6); and
- applying an adhesive layer (7) between said digitally printed substrate (10) and said glass plate (6),
wherein said digital print (5) faces said adhesive layer (7).

12. A method for manufacturing a multi-layered panel (1) according to claim 11, **CHARACTERIZED IN THAT** applying said adhesive layer (7) between said digitally printed substrate (10) and said glass plate (6) comprises the steps of:
- adhering to the outside of said digitally printed substrate (10) and said glass plate (6) a self-adhesive foil (8), the size of said self-adhesive foil (8) exceeding the size of said digitally printed substrate (10) and said glass plate (6) through which a part of each of said self-adhesive foils (8) do not cover said digitally printed substrate (10), respectively said glass plate (6);
- applying a liquid adhesive (7a) between said digitally printed substrate (10) and said glass plate (6);
- bringing said digitally printed substrate (10) and said glass plate (6) together, therewith entrapping said liquid adhesive (7a) between said digitally printed substrate (10) and said glass plate (6) and at the same time sticking together said parts of both foils (8a) not covering said digitally printed substrate (10), respectively said glass plate (6); and
- removing said foil (8) from the formed multi-layered panel (1).

13. A method for manufacturing a multi-layered panel (1) according to claim 11 or 12, **CHARACTERIZED IN THAT** forming a digitally printed glass substrate (10) comprises the steps of
- providing a glass substrate (2);
- applying on at least part of said glass substrate (2) a glass adhesion promoting layer (4);
- applying on at least part of said glass adhesion promoting layer (4) a digital print (5);
wherein said glass adhesion promoting layer (4) is adapted to prevent chemical debonding of said digital print (5) from said glass substrate (2) when said adhesive layer (7) is applied on said digital print (5);
and
- curing said glass adhesion promoting layer (4) and said digital print (5).

14. A method for manufacturing a multi-layered panel (1) according to claim 13, **CHARACTERIZED IN THAT** said digital print (5) is applied on said glass adhesion promoting layer (4) at the moment said glass adhesion promoting layer (4) is wet or semi-dried.

15. A method for manufacturing a multi-layered panel (1) according to claim 13 or 14, **CHARACTERIZED IN THAT** said glass adhesion promoting layer (4) and said digital print (5) are cured in the same curing step.
